# EUROPEAN PATENT SPECIFICATION

(11) **EP 3 280 552 B1**
(45) Date of publication and mention of the grant of the patent: **15.08.2018**
(21) Application number: 15716996.2
(22) Date of filing: 10.04.2015
(51) Int. Cl.: B21D 43/22, B21D 43/00, B65H 31/00, B25J 9/00

(54) **A STACKING LINE SYSTEM, AND A METHOD FOR STACKING BLANKS WHICH ARE OUTPUTTED FROM A BLANKING SHEAR OR PRESS**
ABSTAPELSYSTEM UND VERFAHREN ZUM STAPELN VON ZUSCHNITTEN, DIE AUS EINER SCHNITTSCHERE ODER -PRESSE AUSGEGEBEN WERDEN
SYSTÈME DE LIGNE D'EMPILAGE ET PROCÉDÉ PERMETTANT L'EMPILAGE DE FLANS QUI SORTENT D'UNE MACHINE À CISAILLER DES FLANS OU D'UNE PRESSE À DÉCOUPER DES FLANS

(43) Date of publication of application: 14.02.2018
(73) Proprietor: ABB Schweiz AG, 5400 Baden (CH)
(72) Inventor: VIÑUALES DUESA, Antonio Lorenzo, E-08030 Barcelona (ES); CASANELLES MOIX, Ramon, E-08173 Sant Cugat Del Vallès (ES)
(74) Representative: ZBM Patents - Zea, Barlocci & Markvardsen
(86) International application number: PCT/EP2015/057823
(87) International publication number: WO 2016/162078

(56) References cited:
- WO-A1-2013/185834
- DE-A1- 3 704 058
- JP-A- S58 138 529
- JP-A- 2003 205 331

## Description

The present invention relates to a stacking line system which comprises a transfer unit for receiving the blanks outputted from a blanking shear or press, and stacking supports for stacking the blanks thereon and a method for stacking blanks.

### BACKGROUND ART

In the production of stamped or pressed metal parts, such as for example vehicle parts, presses may be supplied with metal blanks that have previously been cut from a metal coil in a separate blanking line. The blanks may be simple metal sheets of a predetermined length or have trapezoidal shapes (shear cutting by means of a blanking shear), or may present more complex outer shapes, cut-outs, etc. (shape cutting in a blanking press with a cutting die). Blanks produced in a blanking line must be orderly stacked on stacking pallets, trolleys, carts or similar supports, in order to be later moved away from the stacking line and fed one by one to a press line or simply stored for later use or transportation to another production site.

WO2013185834 A1 discloses a system for stacking blanks which comprises two industrial robots, arranged such that they are operable in an individual operating mode in which each robot picks a blank from the transfer unit and places it on a stacking support, and a joint operating mode in which a group of robots act simultaneously on one and the same blank, to pick it from the transfer unit and place it on the stacking support.

Document JP 2003 205331 discloses a workpiece loading method and device wherein workpieces are positioned by a plurality of centering devices situated downstream immediately below the press or a carry-out conveyor installed in the press.

It has now been found that the speed of a stacking system using stacking robots such as disclosed in WO2013185834 A1 may be further improved without losing accuracy.

### SUMMARY

The invention provides a stacking line system for stacking blanks outputted from a blanking shear or press, the stacking line system comprising a transfer unit for receiving blanks outputted from the blanking shear or press, at least one stacking support for stacking blanks thereon, one or more stacking robots to pick blanks from the transfer unit and place them on the stacking support, and a blanks guiding system comprising at least one handling robot adapted to position one or more adjustable centering pins for assisting the placement of the blanks on the stacking support.

Such placement assistance may involve guiding each blank in its vertical descent towards the stacking support, or at least in the last part of the movement, and/or adjusting the position of each blank once it has reached the stack of blanks on the support, so that all the blanks on a stack are substantially aligned or even with each other. The provision of such a system avoids the problem of air cushion effect that may cause errors in their positioning on the stacking support.

Furthermore, stacking robots don't need to place the blanks on the stack in a very accurate manner and may drop them from a distance above the stacking support, and may therefore operate faster, increasing velocity rates and thus improving the overall system's efficiency. In some examples a high accuracy may be achieved, for example +/- 0.5mm, without the need for introducing further complex and expensive systems.

In some examples, the adjustable centering pins of the centering system are pins intended to be attached to the stacking support. In these examples, the need of external pins or handling robots to position the adjustable centering pins is avoided. Instead, a handling robot is used in order to attach the pins to the stacking support.

In some examples, the disclosure provides centering pins that are adapted to be attached to the stacking support in a releasable fashion. In some implementations, the centering pins may comprise magnetic releasable elements, and the stacking support may be made of a ferromagnetic material. These examples provide high versatility due the ability of the system to adapt to any shapes and sizes of the blanks.

The invention further provides a method for stacking blanks outputted from a blanking shear or press, comprising providing a stacking support, positioning one or more adjustable centering pins in correspondence with the stacking support, by means of a handling robot, in predetermined positions depending on the blanks to be stacked, and stacking blanks on the stacking support by means of a stacking robot, such that the placement of the blanks on the stacking support is assisted by the adjustable centering pins.

### BRIEF DESCRIPTION OF THE DRAWINGS

Particular examples of the present invention will be described in the following with reference to the appended drawings, in which:
Figure 1A schematically illustrates in plan view a stacking line system according to some examples, with fixed centering pins and handling robots positioning adjustable centering pins;
Figure 1B schematically illustrates in plan view a stacking line system according to some examples, with magnetic fixed centering pins and handling robots positioning magnetic adjustable centering pins;
Figure 1C schematically illustrates in plan view a stacking line system according to another example, with two handling robots positioning two adjustable centering pins;
Figures 2A and 2B are schematic drawings in plan view of stacking line systems according to examples of the disclosure, with a handling robot displacing non-magnetic frame-mounted centering pins.
Figure 3 is a plan view drawing showing a stacking line system according to a further example, with a handling robot displacing magnetic frame-mounted centering pins.
Figure 4 schematically illustrates a stacking line system according to an example, with a combination of frame-mounted pins and robot-mounted pins.
Figure 5 illustrates a perspective view of a stacking line system according to an example, with a handling robot displacing non-magnetic frame-mounted centering pins.
Figure 6 illustrates a perspective view of a stacking line system according to an example, with frame-mounted pins.
Figure 7 illustrates a lateral view of a frame-mounted pin in detail.
Figure 8 illustrates a perspective view of a stacking line system according to an example of the disclosure, with a handling robot positioning detached centering pins, and stacking supports being located on one side of the stacking line system.
Figures 9A and 9B illustrate a perspective view of a stacking line system according to an example of the disclosure, with two stacking supports exchanging places at one same side of the line.
Figure 10 illustrates a further example of a stacking line system with stacking supports located on both sides of the stacking line system.
Figure 11 schematically illustrates some examples of blank geometries that may be outputted from a blanking shear or press.

### DETAILED DESCRIPTION OF EXAMPLES

In a blanking shear or press, blanks of rectangular or trapezoidal shape are cut by means of a shear from a metal coil. Blanks with more complex shapes may also be formed by means of a contoured blanking die. These blanks are work pieces on which later on further operations may be performed, for instance in a press line. To this end, the blanks outputted from the blanking shear or press are stacked in a stacking line arranged adjacent the blanking shear or press.

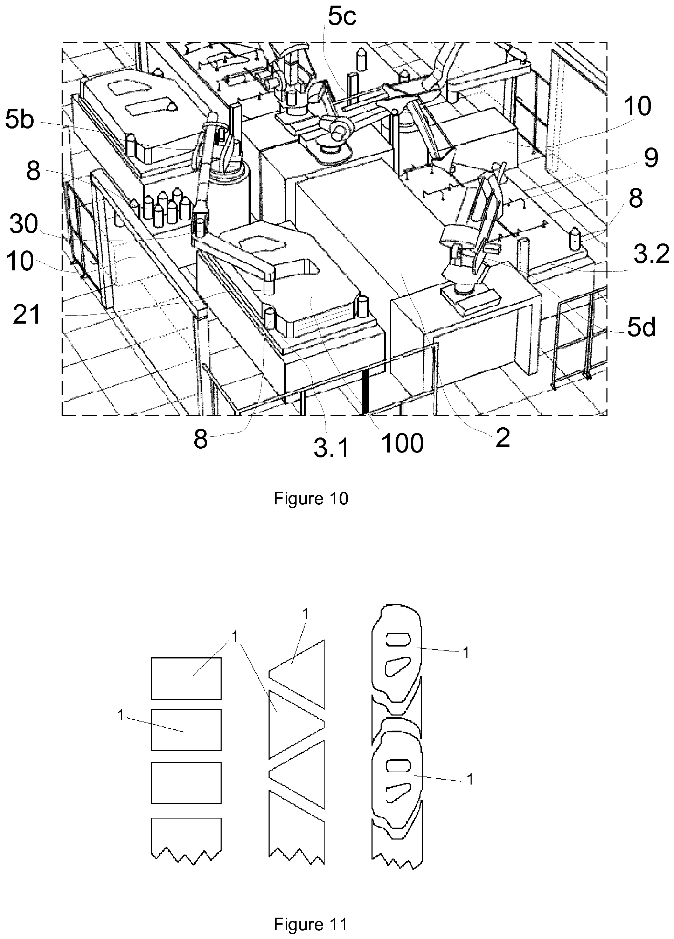

Figure 11 shows by way of example some blanks 1 that may be outputted from a blanking shear or press.

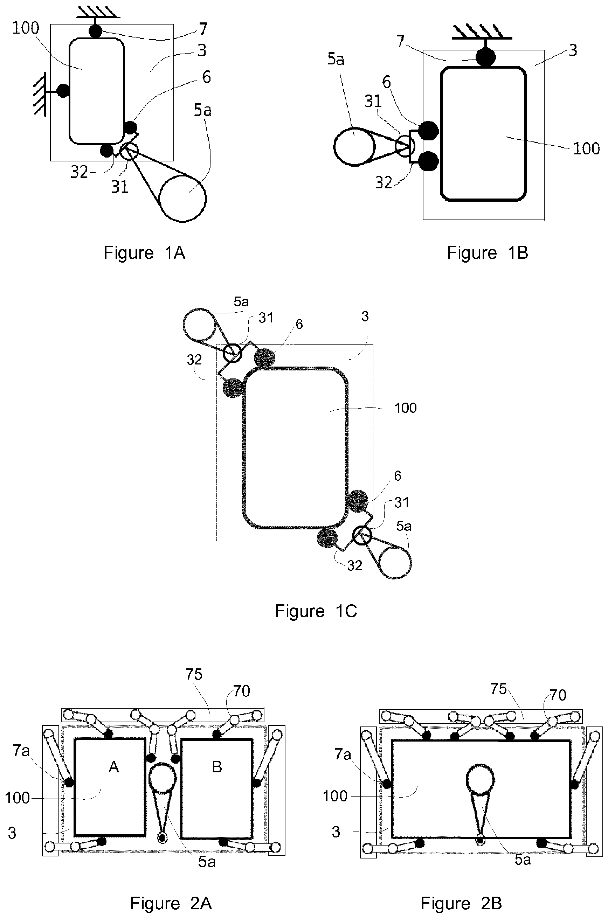

Figure 1A is a schematic drawing showing a stacking line system according to an example of the invention. The system comprises stacking supports 3 for stacking blanks thereon, such that they can be later transported to another production line for further handling. The stacking supports 3 may be of any known type. The stacking line system in this example may comprise a blank guiding system wherein two fixed centering pins 7 are associated with two contiguous sides of the stacking support 3, and a handling robot 5a holding the two adjustable centering pins 6 on the sides of blanks 100 which are substantially orthogonal to the mentioned contiguous sides.

Robot 5a may be controlled by controlling means (not shown) to hold two adjustable centering pins 6 and place them on the side of an associated blank 100 which lies on a stacking support 3. The robot may be a four axis robot. Two adjustable centering pins 6 are attached to a U-shaped structure 32, which is mounted on the fourth axis 31 of the robot so that pins 6 can rotate as the fourth axis moves. Handling robots 5 might be six axis robots as well, in which case the structure 32 might be mounted on the sixth axis.

A stacking robot (not shown), for example a suitable industrial robot, may pick up a blank 100 from a transfer unit of the blanking line (not represented) and place it on the stacking support 3. During this operation the handling robot 5a is holding the two adjustable centering pins 6 at a suitable position, which depends on the shape of the blanks being stacked.

By the expression "industrial robot" it is here meant an automatically controlled, reprogrammable, multipurpose, manipulator programmable in three or more axes, which may be either fixed in place or mobile for use in industrial automation applications, as defined by the International Organization for Standardization in ISO 8373.

The use of pins around the perimeter of the blanks 100 facilitates the centering of the blanks as they are stacked, so that stacking may be performed in a fast and precise manner. In addition, the use of fixed pins allows using a single handling robot 5a with adjustable pins, which has a relatively low cost and leaves plenty of space for operation of the stacking robot.

In some examples, centering pins may be provided with magnets. In this case, since blanks may be attracted towards the pins, they may be guided by pins on two sides instead of four.

Figure 1B shows a schematic drawing according to such an example. The adjustable centering pins 6, 7 comprising magnets also perform a more accurate centering of the blanks 100. This disposition of the pins may further facilitate operation through increased free space around the stacking support, as well as it may provide a reduction of costs due to a decrease in the number of pins.

The fixed pins 7 may be attached to a frame adjacent the stacking support, or may be attached to the stacking support itself. The frame should be rigid enough as to guarantee a vertical position of the pins. For example, the frame may be a metal machined and levelled base.

Figure 1C shows a schematic drawing according to a further example of the disclosure. The blanks guiding system in this example comprises two handling robots 5a. Each robot is adapted to position - during the stacking operation -adjustable centering pins 6 in correspondence with two sides of the stacking support 3 that are orthogonal to each other, which provides the system with high adaptability to possible shapes of the blanks 100 and good stacking accuracy. In some examples, the centering pins may be magnetic. In such case, especially for small dimension blanks, only one handling robot may be sufficient for the guiding task. In such cases, a single robot may guide a stack of small dimension blanks, thus providing very good stacking efficiency.

In the examples shown in Figures 1A, 1B and 1C the guiding system may comprise one handling robot 5a. An example of an industrial robot suitable to be employed as handling robot in such a guiding system is IRB 260 (4 axes) or IRB 1600 (6 axes), available from ABB (www.abb.com), among others.

Figures 2A and 2B show schematically a stacking line system according to examples of the disclosure. A handling robot 5a displaces and positions the frame-mounted pins 7a, which are distributed around the perimeter of the stack. In this example, frame-mounted pins 7a are attached by means of articulated arms which present at least one hinge 70 attached to a rigid frame, for instance a U shaped structure 75. In other examples, such arms might be extendable due to a telescopic structure. The handling robot displaces frame-mounted pins 7a by dragging them to the desired position. This may be performed, for instance, by a rod which may be attached to the handling robot 5a to be insertable in a corresponding opening in the centering pin, such that the robot can engage the pin and drag it to a target position. The stacking system comprises means for releasably locking the articulated arms, in order to temporarily fix the position of each frame-mounted pin 7a before the stacking operation may start. For example, the releasable locking may be implemented by means of a pneumatic cylinder mechanism. The articulated arms may be located in correspondence with at least one side of a support 3.

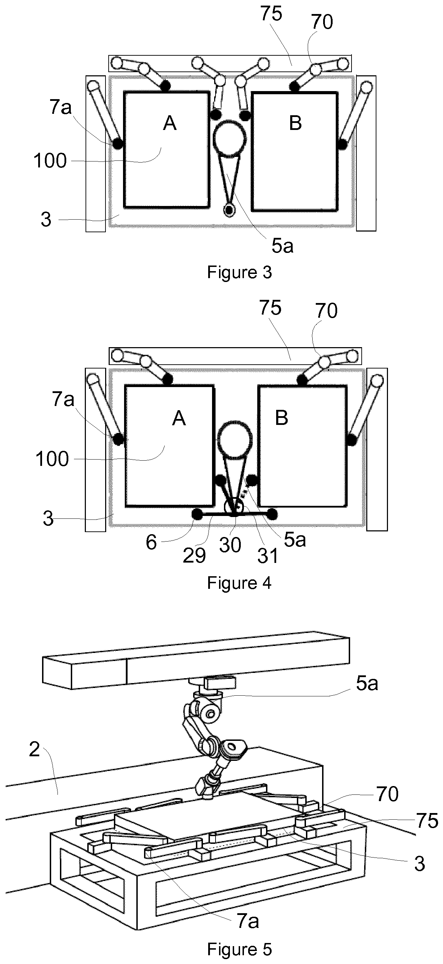

The adjustable centering pins provided by the handling robot 5a may be associated to one or more stacks on a stacking support 3, such as stacks A and B in figure 2A. For this purpose, the roof-mounted handling robot 5a may be located in correspondence with the center of a stacking support 3, as shown in figures 2A and 3. In such case, the robot may displace and position the pins for stacks A and B alternately.

Figure 3 is a schematic drawing of a stacking line system according to examples of the disclosure. This example is analogous to those illustrated in figures 2A and 2B, but for pins 7a comprising magnets. As previously mentioned, a handling robot 5a displaces and positions the frame-mounted adjustable pins. Then the articulated arms are releasably locked by the system before the stacking operation starts. The number of arms provided in this case may be for example of two or three, because pins 7a are magnetic and therefore attract the blanks 100. Due to their magnetic nature, the number of arms provided may be lower than in non-magnetic pins examples seen above.

Figure 4 shows a schematic drawing according to a further example of the disclosure. In this case, a handling robot 5a may be roof-mounted and arranged in correspondence with the center of a stacking support 3, and may be adapted to displace and position the adjustable frame-mounted pins 7a to be associated with one or more stacks A, B on two or three sides of the stacking support 3. Moreover, it may hold adjustable robot-mounted pins 6 during the stacking operation in correspondence with at least another side of the support.

In this example, the handling robot 5a may comprise a wrist mount 30 located at its distal end. A tooling, e.g. a tooling 29 provided with pins 6 suitable for adjusting the position of blanks 100 may be attached to the wrist mount 30. This tooling 29 may comprise four or six arms, of which three are configured to hold pins 6, and one or two arms may hold rods suitable for displacing and positioning frame-mounted pins 7a. Alternatively, the one or two rods might be attached to the handling robot 5a by other means different than tooling 29. Once the handling robot 5a has displaced and positioned the above described frame-mounted pins 7a on the desired locations before the start of the stacking operation, it may proceed to positioning the robot-mounted adjustable pins 6 and hold them in place during the stacking operation. Using the handling robot for setting the position of the frame-mounted pins and also for holding pins during stacking operation allows reducing the number of frame-mounted pins 7a. For example, only two such frame-mounted pins attached to articulated arms are present in the embodiment of figure 4.

After each one of the blanks has been stacked, the robot may push the blank towards the frame-mounted pins 7a by pressing the robot-mounted pins 6 against the side of the blank. Thus, an utmost accurate alignment of each blank with the rest of the stack may be achieved.

In case the blanks are placed on two adjacent stacks on the support 3, the tooling may be rotated and moved alternatively towards one stack or the other, in order to guide each blank that is being stacked. In yet a further example, the wrist mounted tooling may be provided with four pins 6, thus minimizing the rotation of the tooling for each blank. This may be convenient for example in the case of small dimension blanks, in which case the translation and rotation movements of the tooling by the handling robot might be considerably large. This means that the example might minimize the robot's rotation movement, ensuring that it does not exceed the stacking cycle time.

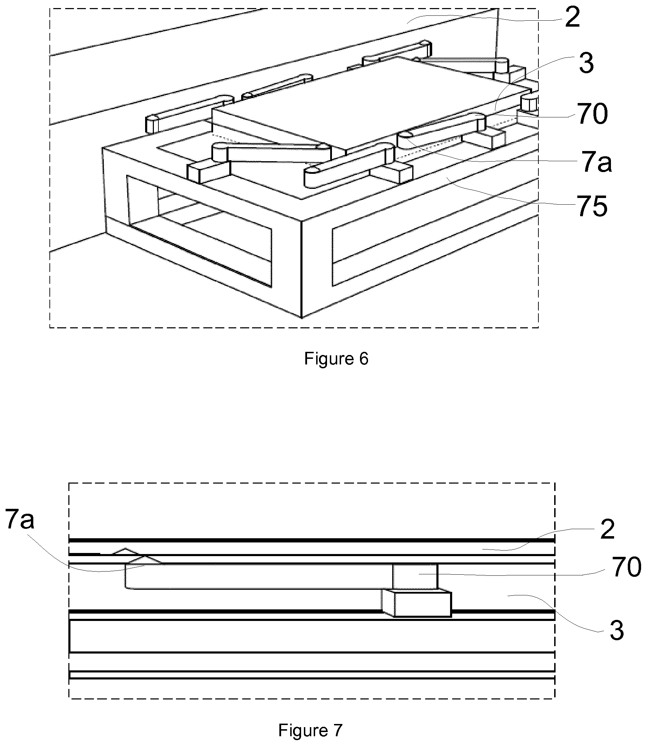

Figures 5 and 6 illustrate a perspective view of a stacking line system according to an example, with adjustable frame-mounted pins 7a mounted on a rectangular frame 75. In this example, the roof-mounted handling robot 5a may set the position of eight frame-mounted pins, which are located around the four sides of the stacking support 3. The system is thus provided with eight frame-mounted pins because it is prepared for the case of two smaller blank stacks, in which case four pins would be required for each stack. In this case, only four pins 7a at the center of each stacking support side are in an active position, because the blanks are smaller than the maximum blank size capacity of the support. Figure 7 illustrates an adjustable frame-mounted pin 7a in detail.

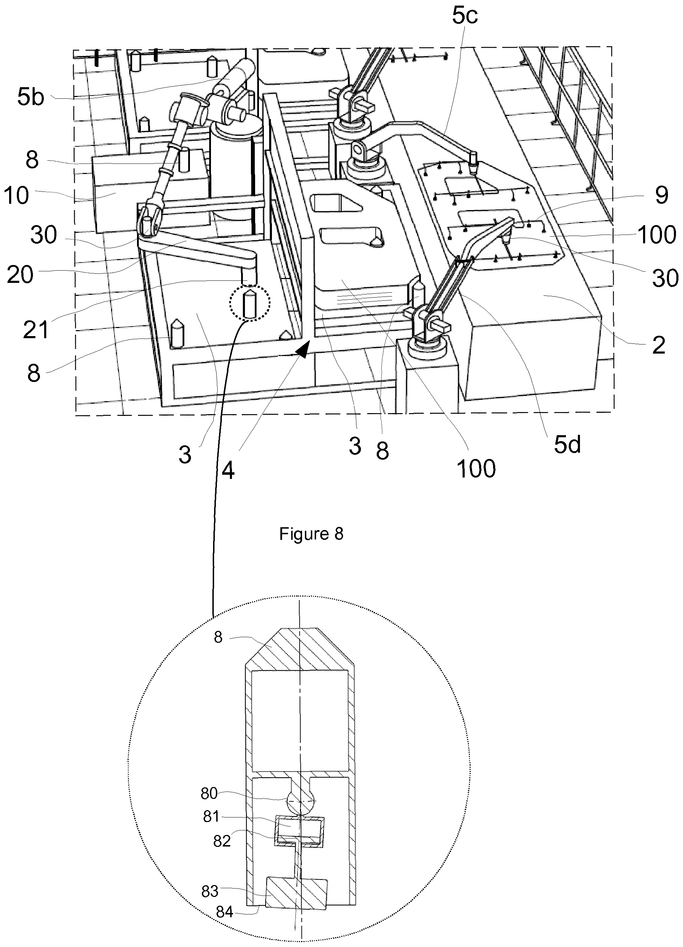

Figure 8 shows a perspective view of a stacking line system according to an example of the invention, which may be arranged at the outlet of a blanking shear or press in order to stack the blanks 100 that are outputted from the blanking shear or press (not shown) on stacking supports 3. In this case the adjustable centering pins are detached pins 8 intended to be attached to the surface of the stacking support 3. In this example the detached centering pins 8 may be adapted to be attached to the stacking support in a releasable fashion.

More particularly, figure 8 shows schematically a transfer unit 2, which receives blanks 100 outputted from the blanking shear or press, and from which stacking robots 5c, 5d pick the blanks 100 in order to stack them, as will be described in the following.

The transfer unit 2 may e.g. be a stationary surface, where all the blanks are received and then picked in the same position; it may be a linear conveyor arranged to transport the blanks 100 along a transport path as shown in figure 8, from where they are picked by the stacking robots 5c, 5d.

The stacking robots may be two serial robots 5c, 5d, each with at least four axes (for example four rotational axes as in robots in figure 8), and they may comprise a wrist mount 30 located at its distal end. A tooling 9 e.g. with magnet or suction cups suitable for picking blanks 100 may be attached to the wrist mount 30.

The stacking robots may also be roof mounted, so as to be a smaller hindrance.

An example of a serial robot that may be employed as a stacking robot in a stacking line system such as that of figures 8, 9A, 9B and 10 is robot IRB 460, available from ABB (www.abb.com).

Stacking robots 5c and 5d may be controlled by control means (not shown) to each pick a blank 100 from the transfer unit 2, or to pick a blank 100 between them, as shown in figure 8, and place it on an associated stacking support 3.

Handling robots 5b may be controlled by control means (not shown) to pick detached centering pins 8 from a pin's store 10 and place them on an associated stacking support 3. The pin's store can be e.g. a surface located besides the handling robot's base and the stacking support 3, according to the best convenience. The handling robot 5b may comprise a wrist mount 30 located at its distal end. An arm 20 provided with a tool 21 at its distal end suitable for picking pins 8 may be attached to the wrist mount 30. The tool 21 may be e.g. an electromagnet based device to pick and place magnetic pins 8.

More particularly, figure 8 shows stacking supports 3 that may be made of a ferromagnetic material, and the detached centering pins 8 may comprise magnetic releasable elements, for example, based on a pneumatic cylinder mechanism. The enlarged detail of figure 8 illustrates an example of a detached pin with an inner releasable magnet consisting of a pneumatic element. In the figure, a detached pin 8 comprises a pneumatic cylinder 82, with an air chamber 81, a magnet 83 and an opening 84. When the air chamber is empty, the cylinder is in its uppermost position, and the magnet 83 is at a distance from the opening 84 and therefore is not able to exert an attracting force towards the stacking support (not shown). On the contrary, when air is inserted in the chamber 81, for example through a tube (not shown), the cylinder is pushed downwards, so that the magnet 83 protrudes from the opening 84 at the base of the pin and is thus able to contact a ferromagnetic stacking support 3 and to attach the pin to its surface. In some cases, the stacking support may have an uneven upper surface (e.g. a not machined metal base) and the magnet may assume an unlevelled position as shown in figure 10A. A levelling mechanism, in this example a ball joint 80, is foreseen so as to allow the pin to assume an upright position.

As the stacking support is ready for receiving the blanks, the handling robot picks up the pins and positions them singularly at their corresponding locations on the surface of the stacking support. The locations are predetermined according to the shape and size of the blanks, and may therefore be adapted to any configuration which better suits the blanks centering requirements. This provides the system with high flexibility while maintaining an accuracy that may be satisfactory in some cases.

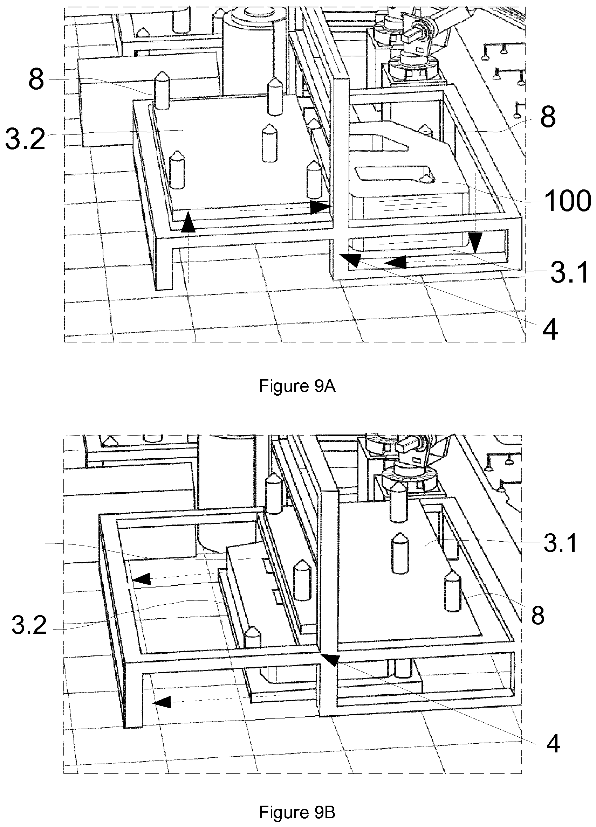

More particularly, figures 9A and 9B show schematically the operation of a transporting device 4. The purpose of this example is to provide a solution in cases where the stacking line system presents only one operative side for arranging stacking supports 3 as shown in figure 8. In this example, at least two stacking supports 3.1 and 3.2 as shown in figures 9A and 9B are adapted to be moved alternately between a stacking position adjacent to the transfer unit and a pin-placing position to a greater distance from the transfer unit.

As in the example shown in figures 9A and 9B, the two stacking supports 3.1 and 3.2 may move upwards and towards a stacking position adjacent to the transfer unit, and downwards and towards a pin-placing position to a greater distance from the transfer unit, respectively, as shown in figure 9A; Thus, the stacking supports 3.1 and 3.2 may be operated in an alternate mode, in which while stacking robots 5c, 5d pick blanks outputted from the line and place them on a stacking support, the handling robot 5b picks the centering pins 8 and places them on another empty stacking support. Such an operation increases the line velocity and allows for a high working efficiency.

Such alternate mode operation may be performed as described in the following sequence.
- Detached centering pins 8 are releasably attached on a stacking support 3.2 by means of the handling robot 5b in the predetermined locations which correspond to the blanks to be stacked thereafter. In the meanwhile, blanks are being stacked on top of the stacking support 3.1;
- after the stack on the stacking support 3.1 is complete and the pins are placed on support 3.2, the transporting device 4 moves the stacking supports 3.1 and 3.2 between the stacking position and the pin-placing position by means of the above described movements.
- centering pins 8 are removed by the handling robot 5b from a stacking support 3.1 which contains a stack of blanks 100 and is located at a lowest and external position with respect to the transfer unit 2 (or pin-placing position);
- the stacking support 3.1 with a stack of blanks 100 is removed by a forklift truck and replaced with a new, empty stacking support 3.

Figure 10 illustrates a further example of a stacking line system with stacking supports 3 located at both sides of the stacking line system. In such example, the above mentioned transporting device 4 is not necessary. Instead, two handling robots 5b may be provided, one for each side of the transfer unit 2. Under operation, while the stacking support 3.2 at one first side is being filled with blanks, the stacking support 3.1 at one second side is being emptied.

Thus, after blanks have been stacked on the stacking support at the first side, the stacking robots 5c, 5d that pick blanks 100 from the transfer unit 2 initiate stacking the blanks on the second side, i.e., on the second stacking support 3 that has been previously prepared as by the sequence described in the following.

At a first side of the stacking line,
- centering pins 8 are removed from a stacking support 3 on which a stack of blanks has just been completed by the handling robot 5b;
- the support 3 is removed by forklift truck or the like (not shown) and a new stacking support 3 is provided;
- centering pins 8 are releasably attached on the new stacking support 3 by means of the handling robot 5b in the predetermined locations which correspond to the blanks 100 to be stacked thereafter.

Simultaneously, at a second side of the stacking line, the stacking of the blanks is taking place until the stacking support 3 is ready for being removed. In all of these examples, the handling robots may be SCARA (Selective Compliance Assembly Robot Arm) robots. The 3 axis present in these robots are sufficient for their function in these examples. SCARAs are generally faster and cleaner than comparable serial robot systems, as well as cheaper. Therefore, their implementation may provide an increase in accuracy and a reduction in costs.

## Claims

1. A stacking line system for stacking blanks outputted from a blanking shear or press, the stacking line system comprising
a transfer unit (2) for receiving blanks (100) outputted from the blanking shear or press;
at least one stacking support (3) for stacking blanks thereon; and
one or more stacking robots (5c, 5d) to pick blanks from the transfer unit and place them on the stacking support;
**characterized in that** it comprises a blanks guiding system comprising at least one handling robot (5a, 5b) adapted to position one or more adjustable centering pins (6) for assisting the placement of the blanks (100) on the stacking support (3).

2. A stacking line system according to claim 1, wherein the blanks guiding system further comprises at least one fixed centering pin (7) in a fixed position with respect to the stacking support.

3. A stacking line system according to claim 2, wherein two fixed centering pins (7) are respectively located in correspondence with two sides of the stacking support (3), and wherein the handling robot (5a) is adapted to position at least two adjustable centering pins (6) in correspondence with other sides of the stacking support (3).

4. A stacking line system according to any of claims 1-3, wherein the blanks guiding system comprises at least two handling robots (5a), each adapted to position adjustable centering pins (6) in correspondence with two sides of the stacking support (3) that are orthogonal to each other.

5. A stacking line system according to claim 1, wherein the adjustable centering pins comprise frame-mounted pins (7a) attached to a frame (75) of the guiding system through articulated arms or telescopic arms, said frame (75) being arranged in the vicinity of the stacking support (3).

6. A stacking line system according to claim 5, comprising means for releasably locking the articulated arms to temporarily fix the position of each frame-mounted pin (7a).

7. A stacking line system according to claim 1, wherein the adjustable centering pins of the guiding system comprise detached pins (8) adapted to be releasably attached to the upper surface of the stacking support (3).

8. A stacking line system according to claim 7, wherein each detached pin (8) comprises a releasable magnetic element and the stacking support (3) comprises a ferromagnetic material.

9. A stacking line system according to any of claims 7-8 comprising at least two stacking supports (3.1, 3.2) and a transporting device (4) adapted to move each stacking support (3.1, 3.2) between a stacking position and a pin-placing position.

10. A method for stacking blanks outputted from a blanking shear or press comprising:
providing a stacking support (3);
positioning one or more adjustable centering pins (6) in correspondence with the stacking support (3), by means of a handling robot (5a, 5b), in predetermined positions depending on the blanks (100) to be stacked; and
stacking blanks (100) on the stacking support (3) by means of a stacking robot (5a, 5b), such that the placement of the blanks (100) on the stacking support (3) is assisted by the adjustable centering pins (6).

11. A method as claimed in claim 10, comprising holding at least one centering pin (6) by means of a handling robot (5a) while the blanks (100) are being stacked.

12. A method as claimed in claim 11, comprising adjusting the position of each blank (100) after it is placed on the stacking support 83) by pushing it in a horizontal direction with the adjustable centering pins (6).

13. A method as claimed in claim 10, wherein the method comprises releasably attaching a number of detached pins (8) on the upper surface of a stacking support (3) by means of a handling robot (5b) before stacking blanks (100) on the stacking support (3).

14. A method as claimed in claim 13, comprising removing the detached pins (8) from the stacking support (3) by means of a handling robot (5b) after blanks (100) have been stacked on the stacking support (3).

15. A method as claimed in claim 14, comprising
providing a stacking support (3) at a pin-placing position;
attaching a number of detached pins (8) on the stacking support (3) at the pin-placing position;
moving the stacking support (3) to a stacking position;
stacking blanks (100) on the stacking support (3) at the stacking position;
moving the stacking support (3) with the blanks (100) back to the pin-placing position; and
removing the detached pins (8) from the stacking support (3) at the pin-placing position.

## Patentansprüche

1. Abstapelsystem zum Stapeln von Zuschnitten, die aus einer Schnittschere oder -presse ausgegeben werden, wobei das Abstapelsystem Folgendes umfasst:
eine Transfereinheit (2) zum Empfangen von Zuschnitten (100), die aus der Schnittschere oder -presse ausgegeben werden;
mindestens eine Stapelauflage (3) zum Stapeln von Zuschnitten darauf; und
einen oder mehrere Stapelroboter (5c, 5d) zum Greifen von Zuschnitten von der Transfereinheit und Platzieren davon auf der Stapelauflage;
**dadurch gekennzeichnet, dass** es ein Zuschnittführungssystem umfasst, welches mindestens einen Handhabungsroboter (5a, 5b) umfasst, der angepasst ist, um einen einstellbaren oder mehrere einstellbare Zentrierstifte (6) zum Unterstützen der Platzierung der Zuschnitte (100) auf der Stapelauflage (3) zu positionieren.

2. Abstapelsystem nach Anspruch 1, wobei das Zuschnittführungssystem ferner mindestens einen festen Zentrierstift (7) in einer festen Position bezüglich der Stapelauflage umfasst.

3. Abstapelsystem nach Anspruch 2, wobei zwei feste Zentrierstifte (7) jeweils in Übereinstimmung mit zwei Seiten der Stapelauflage (3) angeordnet sind und wobei der Handhabungsroboter (5a) angepasst ist, um mindestens zwei einstellbare Zentrierstifte (6) in Übereinstimmung mit anderen Seiten der Stapelauflage (3) zu positionieren.

4. Abstapelsystem nach einem der Ansprüche 1 bis 3, wobei das Zuschnittführungssystem mindestens zwei Handhabungsroboter (5a) umfasst, wobei jeder angepasst ist, um einstellbare Zentrierstifte (6) in Übereinstimmung mit zwei Seiten der Stapelauflage (3) zu positionieren, welche orthogonal zueinander sind.

5. Abstapelsystem nach Anspruch 1, wobei die einstellbaren Zentrierstifte am Rahmen montierte Stifte (7a) umfassen, welche an einem Rahmen (75) des Führungssystems durch Gelenkarme oder Teleskoparme angebracht sind, wobei der Rahmen (75) in der Nähe der Stapelauflage (3) angeordnet ist.

6. Abstapelsystem nach Anspruch 5, welches Mittel zum lösbaren Verriegeln der Gelenkarme zum vorübergehenden Feststellen der Position jedes am Rahmen montierten Stiftes (7a) umfasst.

7. Abstapelsystem nach Anspruch 1, wobei die einstellbaren Zentrierstifte des Führungssystems freistehende Stifte (8) umfassen, welche angepasst sind, um lösbar an der oberen Fläche der Stapelauflage (3) angebracht zu sein.

8. Abstapelsystem nach Anspruch 7, wobei jeder freistehende Stift (8) ein lösbares magnetisches Element umfasst und die Stapelauflage (3) ein ferromagnetisches Material umfasst.

9. Abstapelsystem nach einem der Ansprüche 7 bis 8, welches mindestens zwei Stapelauflagen (3.1, 3.2) und eine Transportvorrichtung (4), die angepasst ist, um jede Stapelauflage (3.1, 3.2) zwischen einer Stapelposition und einer Stiftplatzierungsposition zu bewegen, umfasst.

10. Verfahren zum Stapeln von Zuschnitten, die aus einer Schnittschere oder -presse ausgegeben werden, welches Folgendes umfasst:
Bereitstellen einer Stapelauflage (3);
Positionieren eines einstellbaren oder mehrerer einstellbarer Zentrierstifte (6) in Übereinstimmung mit der Stapelauflage (3) mittels eines Handhabungsroboters (5a, 5b) in vorbestimmten Positionen in Abhängigkeit von den zu stapelnden Zuschnitten (100); und
Stapeln von Zuschnitten (100) auf der Stapelauflage (3) mittels eines Stapelroboters (5a, 5b), sodass die Platzierung der Zuschnitte (100) auf der Stapelauflage (3) von den einstellbaren Zentrierstiften (6) unterstützt wird.

11. Verfahren nach Anspruch 10, welches das Festhalten von mindestens einem Zentrierstift (6) mittels eines Handhabungsroboters (5a) während des Stapelns der Zuschnitte (100) umfasst.

12. Verfahren nach Anspruch 11, welches das Einstellen der Position jedes Zuschnitts (100) nach dem Platzieren davon auf der Stapelauflage 83) durch das Schieben davon in einer horizontalen Richtung mit den einstellbaren Zentrierstiften (6) umfasst.

13. Verfahren nach Anspruch 10, wobei das Verfahren das lösbare Anbringen einer Anzahl von freistehenden Stiften (8) an der oberen Fläche einer Stapelauflage (3) mittels eines Handhabungsroboters (5b) vor dem Stapeln der Zuschnitte (100) auf der Stapelauflage (3) umfasst.

14. Verfahren nach Anspruch 13, welches das Entfernen der freistehenden Stifte (8) von der Stapelauflage (3) mittels eines Handhabungsroboters (5b) nach dem Stapeln der Zuschnitte (100) auf der Stapelauflage (3) umfasst.

15. Verfahren nach Anspruch 14, welches Folgendes umfasst:
Bereitstellen einer Stapelauflage (3) an einer Stiftplatzierungsposition;
Anbringen einer Anzahl von freistehenden Stiften (8) auf der Stapelauflage (3) an der Stiftplatzierungsposition;
Bewegen der Stapelauflage (3) zu einer Stapelposition;
Stapeln von Zuschnitten (100) auf der Stapelauflage (3) an der Stapelposition;
Bewegen der Stapelauflage (3) mit den Zuschnitten (100) zurück in die Stiftplatzierungsposition; und
Entfernen der freistehenden Stifte (8) von der Stapelauflage (3) an der Stiftplatzierungsposition.

## Revendications

1. Système de ligne d'empilage pour l'empilage de découpes produites par une cisaille ou presse de découpe, le système de ligne d'empilage comprenant
une unité de transfert (2) pour la réception de découpes (100) produites par la cisaille ou presse de découpe ;
au moins un support d'empilage (3) pour l'empilage de découpes sur celui-ci ; et
un ou plusieurs robots d'empilage (5c, 5d) pour ramasser les découpes de l'unité de transfert et pour les placer sur le support d'empilage ;
**caractérisé en ce qu'**il comprend un système de guidage de découpes comprenant au moins un robot de manutention (5a, 5d) adapté pour positionner une ou plusieurs goupilles de centrage ajustables (6) pour assister le placement des découpes (100) sur le support d'empilage (3).

2. Système de ligne d'empilage selon la revendication 1, dans lequel le système de guidage de découpes comprend en outre une goupille de centrage fixe (7) dans une position fixe par rapport au support d'empilage.

3. Système de ligne d'empilage selon la revendication 2, dans lequel deux goupilles de centrage fixes (7) sont respectivement placées en correspondance avec deux côtés du support d'empilage (3), et dans lequel le robot de manutention (5a) est adapté pour positionner au moins deux goupilles de centrage ajustables (6) en correspondance avec d'autres côtés du support d'empilage (3).

4. Système de ligne d'empilage selon l'une quelconque des revendications 1-3, dans lequel le système de guidage de découpes comprend au moins deux robots de manutention (5a), chacun étant adapté pour positionner des goupilles de centrage ajustables (6) en correspondance avec deux côtés du support d'empilage (3) qui sont orthogonaux entre eux.

5. Système de ligne d'empilage selon la revendication 1, dans lequel les goupilles de centrage ajustables comprennent des goupilles montées sur châssis (7a) reliées à un châssis (75) du système de guidage moyennant des bras articulés ou des bras télescopiques, ledit châssis (75) étant disposé à proximité du support d'empilage (3).

6. Système de ligne d'empilage selon la revendication 5, comprenant des moyens pour bloquer de façon amovible les bras articulés pour fixer temporairement la position de chaque goupille montée sur châssis (7a).

7. Système de ligne d'empilage selon la revendication 1, dans lequel les goupilles de centrage ajustables du système de guidage comprennent des goupilles détachées (8) adaptées pour être reliées de façon amovible à la surface supérieure du support d'empilage (3).

8. Système de ligne d'empilage selon la revendication 7, dans lequel chaque goupille détachée (8) comprend un élément magnétique amovible et le support d'empilage (3) comprend un matériau ferromagnétique.

9. Système de ligne d'empilage selon l'une quelconque des revendications 7-8 comprenant au moins deux supports d'empilage (3.1, 3.2) et un dispositif de transport (4) adapté pour déplacer chaque support d'empilage (3.1, 3.2) entre une position d'empilage et une position de placement de goupilles.

10. Procédé pour l'empilage de découpes produites par une cisaille ou presse de découpe comprenant :
la fourniture d'un support d'empilage (3) ;
le positionnement d'une ou plusieurs goupilles de centrage ajustables (6) en correspondance avec le support d'empilage (3), au moyen d'un robot de manutention (5a, 5b), dans des positions prédéterminées en fonction des découpes (100) à empiler ; et
l'empilage de découpes (100) sur le support d'empilage (3) au moyen d'un robot d'empilage (5a, 5b), de sorte que le placement des découpes (100) sur le support d'empilage (3) est assisté par les goupilles de centrage ajustables (6).

11. Procédé tel que revendiqué dans la revendication 10, comprenant la manipulation d'au moins une goupille de centrage (6) au moyen d'un robot de manutention (5a) tandis que les découpes (100) sont empilées.

12. Procédé tel que revendiqué dans la revendication 11, comprenant l'ajustement de la position de chaque découpe (100) après qu'elle est placée sur le support d'empilage (3) en la poussant dans un sens horizontal avec les goupilles de centrage ajustables (6).

13. Procédé tel que revendiqué dans la revendication 10, dans lequel le procédé comprend la liaison de façon amovible d'un nombre de goupilles détachées (8) sur la surface supérieure d'un support d'empilage (3) au moyen d'un robot de manutention (5b) avant l'empilage de découpes (100) sur le support d'empilage (3).

14. Procédé tel que revendiqué dans la revendication 13, comprenant le retrait des goupilles détachées (8) du support d'empilage (3) au moyen d'un robot de manutention (5b) après que les découpes (100) ont été empilées sur le support d'empilage (3).

15. Procédé tel que revendiqué dans la revendication 14, comprenant la fourniture d'un support d'empilage (3) à une position de placement de goupille ;
la liaison d'un nombre de goupilles détachées (8) sur le support d'empilage (3) à la position de placement de goupille ;
le déplacement du support d'empilage (3) à une position d'empilage ; l'empilage de découpes (100) sur le support d'empilage (3) à la position d'empilage ;
le retour du support d'empilage (3) avec les découpes (100) à la position de placement de goupille ; et
le retrait des goupilles détachées (8) du support d'empilage (3) à la position de placement de goupille.
